# EUROPÄISCHE PATENTSCHRIFT

(11) **EP 2 884 774 B1**
(45) Veröffentlichungstag und Bekanntmachung des Hinweises auf die Patenterteilung: **27.02.2019**
(21) Anmeldenummer: 14190154.6
(22) Anmeldetag: 23.10.2014
(51) Int. Cl.: H04R 29/00, G01H 3/00, G01S 7/52, H04R 17/00, H04R 3/00, B06B 1/06, G01S 15/93

(54) **Verfahren zur kontaktlosen Funktionsprüfung eines Signalwandlers**
Method for the non-contact testing of the function of a signal converter
Procédé de vérification de fonctionnement sans contact d'un convertisseur de signal

(30) Priorität: 11.12.2013 DE 102013225643
(43) Veröffentlichungstag der Anmeldung: 17.06.2015
(73) Patentinhaber: ROBERT BOSCH GMBH, 70442 Stuttgart (DE)
(72) Erfinder: Karl, Matthias, 76275 Ettlingen (DE)

(56) Entgegenhaltungen:
- EP-A2- 0 268 788
- EP-A2- 1 962 546
- EP-A2- 2 808 699
- DE-A1-102005 013 589
- DE-A1-102005 027 278
- DE-A1-102007 023 720
- JP-A- S57 158 525
- US-A1- 2004 153 224
- US-A1- 2011 051 941
- US-A1- 2011 211 705
- Anonymous: "BMW Young Academy In-car Technology", , 30. April 2015 (2015-04-30), Seiten 1-28, XP055187029, Gefunden im Internet: URL:https://web.archive.org/web/2015043011 4639/http://www.bmweducation.co.uk/academy /downloads/L1_Auto_Sensors_Students.pdf [gefunden am 2015-04-30]

## Beschreibung

### Stand der Technik

Die vorliegende Erfindung betrifft ein Verfahren zur kontaktlosen Funktionsprüfung eines Signalwandlers. Insbesondere betrifft die vorliegende Erfindung die Aufnahme und Überprüfung vordefinierter Parameter eines Schallwandlers eines Messsystems für den automobilen Einsatz.

Bei der akustischen Umfelddetektion werden eine Vielzahl Elektro-Akustik-Wandler eingesetzt, mit deren Hilfe elektrische in akustische Messsignale gewandelt und ausgesandt werden bzw. akustische Signale aus der Umgebung empfangen und in elektrische Signale gewandelt werden. In zunehmendem Maße werden mit ihnen immer komplexere Sensorik-Funktionen entwickelt und realisiert. WO 2012/072360 A1 zeigt ein Beispiel für eine schnelle PSL-Objekt-Detektion u.a. mittels v-Messung. Um den steigenden Zuverlässigkeitsanforderungen gerecht zu werden, wird eine Vielzahl Verfahren zur Eigenüberwachung vorgeschlagen. Ein Beispiel hierfür ist die spektrale Kalibrierung, wie sie in der DE 10 2009 054 667 A1 beschrieben ist. Ein weiteres Beispiele ist die Eigenüberwachung mittels zusätzlicher Quelle, wie sie in DE 102009027231 A1 bzw. WO 2013107563 A1 beschrieben ist. Neben solchen systeminternen Überwachungsmöglichkeiten wächst zunehmend der Bedarf an einer Sensorprüfung, ohne dass in das System eingegriffen werden muss. Während der Fertigung bzw. nach erfolgter Fertigstellung Steckkontakte zu öffnen oder Sensoren auszubauen, ist aus Kostengründen keine attraktive Lösung. Insbesondere in dem Fall, dass die Sensorprüfung innerhalb eines den Sensor enthaltenden Endproduktes erfolgen soll (Stoßfänger/Schürze von Pkw), gestaltet sich die Prüfung aufwändig bis unmöglich. In diesem Zusammenhang wird nicht nur an die heute in Nutzung befindlichen Funktionen gedacht, sondern insbesondere auch an solche, die nicht nur das Ultraschallband nutzen. Die charakteristischen Merkmale der Sensoren (z.B. Serieninduktivität, Serienkapazität, Serienwiderstand, Parallelkapazität des Wandlers usw.) werden heutzutage bei der Sensorfertigung mitunter in einer speziellen Messstation vor Endprüfung mittels Kleinsignal (Spannung < 10 V) durch einen Impedanzmesser getestet. Bei der Impedanzmessung wird der Wandler bei verschiedenen Frequenzen angesteuert und das Verhältnis von Strom und Spannung analysiert. Eigenschaften des Sensors, die zum Beispiel infolge von Nichtlinearitäten, Vorschädigungen des Piezoelements und der Klebung, der Schweißungen, nachträglicher Wärmebehandlungen usw., erst bei der vollen Sendespannung von ca. 130 V zu Tage treten, werden dabei heutzutage weder in der Fertigung noch jemals nach Sensorauslieferung erfasst. In ungünstigen Situationen können sich jedoch solche Eigenschaften der Sensoren zum Beispiel als unerwartet schlechte Messergebnisse und Funktionsausfälle bemerkbar machen. Derzeit ist es lediglich bekannt, die fertiggestellten Sensoren mittels Mikrophonen einer Messung ihrer Schallstärke zu unterziehen und selbige auf ein Sollmaß einzustellen. Anschließend wird die Empfindlichkeit der Sensoren anhand von Reflexen der Messsignalaussendungen an Referenzhindernissen abgeglichen. Eine Überprüfung der den Wandler charakterisierenden Ersatzparameter findet in solchen Endprüfungssituationen nicht statt. Das Ansteuern des Wandlers bei der Impedanzmessung mit verschiedenen Messfrequenzen kostet jedoch mehr Prüfzeit, als das detaillierte Auswerten des Zeitsignals, insbesondere des Ausschwingsignals, bezüglich Abnahme der Signalstärke (z.B. Dämpfungsverlauf und Frequenzverlauf).

Aus DE 102007023720 A1 ist eine Messeinrichtung zur Anpassung und Überprüfung eines Lautsprechers im Innenraum eines Fahrzeugs bekannt. Dazu werden mehrere Mikrofone mittels einer Halteeinrichtung an einem Fahrzeugsitz befestigt. Mit dieser Anordnung kann die Phasenlage der von einer Lautsprechereinheit abgegebenen Schallwellen überprüft werden.

Die DE 102005027278 A1 beschreibt eine Messeinrichtung zur Überprüfung eines Lautsprechers im Innenraum eines Fahrzeugs. Dabei wird eine Funktionsüberprüfung durchgeführt indem zwei Mikrofone an definierten Positionen im Innenraum des Fahrzeugs positioniert und auf den Lautsprecher, der (hörbare) Schallwellen abgibt, ausgerichtet werden. Durch einen Vergleich der von den Mikrofonen empfangenen Signale kann auf eine bestimmungsgemäße Funktion des Lautsprechers geschlossen werden.

Auch in den Dokumenten US 2004/0153224 A1 und US 2011/0211705 A1 ist jeweils beschreiben, eine Funktionsüberprüfung eines Audiosystems im Inneren eines Fahrzeugs im hörbaren Frequenzbereich behandelt.

Aus der EP 0268788 A2 ist ein Verfahren zur Funktionsüberprüfung eines Mikrofons bekannt, das zum akustischen Empfangen von Schallwellen eingerichteten Signalwandlers dient. Insbesondere ist das Verfahren für Mikrofone ausgelegt, die als Teil einer Schallmessanlage im Freien ausgebildet sind. Zur Funktionsüberprüfung werden ein oder mehrere Lautsprecher an definierten Positionen relativ zu dem Mikrofon platziert. Die Lautsprecher geben ein definiertes Prüfsignal ab, das von dem Mikrofon empfangen wird, wobei die Phasenlage zwischen dem Prüfsignal und dem empfangenen Signal zur Funktionsüberprüfung ausgewertet wird.

Die US 2011/0051941 A1 beschreibt ein Verfahren zur Funktionsüberprüfung eines Mikrofons, das in einem Fahrzeug für Spracheingaben der Fahrzeuginsassen, also im Fahrzeuginneren, genutzt wird. Dazu wird ein analoges Testsignal erzeugt, das von dem Mikrofon aufgenommen und in ein digitales Signal umgewandelt wird. Durch Auswertung des digitalen Signals wird auf die Funktionsfähigkeit des Mikrofons geschlossen.

Aus dem Artikel "BMW Young Academy In-car Technology", 30.04.2015, XP055187029 ist bekannt, Ultraschallsensoren in Automobilen einzusetzen. Dabei ist ein Testmodus vorgesehen, bei dem definierte Objekte vor dem Ultraschallsensor platziert und bewegt werden.

Die EP 1 962 546 A2 beschreibt eine Verwendung mehrerer Mikrofone als Schallaufnehmer zur Erweiterung eines messbaren Amplitudenbereichs der zu messenden Schallsignale.

Die DE 10 2005 013589 A1 offenbart ein Verfahren mit den Merkmalen des einleitenden Teils des unabhängigen Anspruchs 1. Es ist daher eine Aufgabe der vorliegenden Erfindung, eine detaillierte und aufwandsarme Überprüfung fertiggestellter Sensoren und ihrer Betriebsparameter bereitzustellen. Dabei soll auch eine Überprüfung der Sensoren möglich sein, ohne sie aus ihrem Einsatzumfeld bzw. ihrer Verbau-Umgebung, wie beispielsweise einem Fahrzeug, entfernen zu müssen.

### Offenbarung der Erfindung

Die vorstehend genannte Aufgabe wird entsprechend einem Aspekt erfindungsgemäß durch ein Verfahren gemäß den Schritten des Anspruchs 1 gelöst. Die Unteransprüche betreffen bevorzugte Weiterbildungen der Erfindung. Zunächst wird der Signalwandler in seiner bestimmungsgemäßen Peripherie angeordnet. Die bestimmungsgemäße Peripherie kann beispielsweise ein Stoßfänger eines Kraftfahrzeugs, eine Heckschürze eines Kraftfahrzeugs o.Ä. sein. Je nach Einsatzgebiet und bestimmungsgemäßer Funktion können weitere Peripherien in Frage kommen. Bei Sensoren, die Messsignale generieren können, werden anschließend die elektrischen Anschlüsse des Signalwandlers mit einem vordefinierten Testsignal beaufschlagt, im Ansprechen worauf der Signalwandler ein akustisches Signal in seine Umgebung aussendet. Dieses wird unter vordefinierten Randbedingungen mittels mindestens zwei Mikrofone aufgenommen. Mit anderen Worten erfolgt eine Rückwandlung des ausgesendeten Signals in den elektrischen Bereich. Der hierfür verwendbare Wandler weist bevorzugt eine Übertragungsfunktion auf, von welcher einzelne Parameter (insbesondere Frequenzgang und/oder Phasengang) bekannt sind. Das elektrisch gewandelte Prüfsignal wird anschließend hinsichtlich vordefinierter Parameter des Signalwandlers analysiert. Beispiele für vordefinierte Parameter sind Wirkungsgrad des Wandlers, Dämpfungszeitkontante bzw. Dämpfungsverhalten, Wandler-Resonanzfrequenz, Resonanzfrequenz der den Wandler umgebenden Schaltung, Differenz dieser Frequenzen etc. Anschließend wird die Funktion des Signalwandlers anhand der vordefinierten Parameter sowie anhand dem Signalwandler zugeordneter Referenzen beurteilt. Mit anderen Worten erfolgt eine Prüfung des elektrisch gewandelten Umgebungssignals dahingehend, ob der Signalwandler vordefinierten Qualitätskriterien genügt. Auf diese Weise kann eine realitätsgetreue Funktionsprüfung eines Massenproduktes durchgeführt werden, ohne dass Exemplare auseinandergenommen (zerstört) und/oder separat elektrisch kontaktiert werden.

Bevorzugt sind die Randbedingungen zumindest hinsichtlich einer relativen Anordnung der mindestens zwei Mikrofone gegenüber dem Signalwandler oder der Peripherie des Signalwandlers vordefiniert. Auf diese Weise ergibt sich eine verlässliche Testumgebung, welche mit den zugeordneten Referenzen kongruiert.

Erfindungsgemäß weisen die mindestens zwei Mikrofone unterschiedliche Empfindlichkeitsbereiche auf bzw. sind für unterschiedliche Signalstärken ausgelegt. Zumindest anteilig können die Empfindlichkeitsbereiche sich voneinander unterscheiden, um unterschiedlichen Testsignalen und - entfernungen genügen zu können.

Erfindungsgemäß sind der erste Empfindlichkeitsbereich auf einen Sendevorgang mittels des Signalwandlers und der zweite Empfindlichkeitsbereich auf einen Ausschwingvorgang des Signalwandlers abgestimmt.

Dabei wird während des Sendevorgangs fortwährend elektrische Energie auf die Wandlermembran gebracht, während der Ausschwingvorgang nach dem Abschalten der Anregung beginnt. Da unterschiedliche Parameter in die vorgenannten Betriebszustände eingehen, können auf diese Weise eine Vielzahl relevanter vordefinierter Parameter erfindungsgemäß für den Signalwandler ermittelt werden.

Werden zwei Mikrofone zum Aufnehmen des Umgebungssignals des Signalwandlers verwendet, kann ein erstes Mikrofon eine erste Position relativ zum Signalwandler aufweisen, während ein zweites Mikrofon eine zweite Position relativ zum Signalwandler aufweisen kann. Die Positionen können derart gewählt werden, dass die Mikrofone zur Ermittlung einer Richtcharakteristik in unterschiedlichen Winkeln hinsichtlich einer Sendehauptrichtung des Signalwandlers angeordnet sind. Die Sendehauptrichtung kann beispielsweise mit einer Längsachse (in Schwingungsrichtung der Membran weisend) zusammenfallen. Die Winkel können in unterschiedliche Richtungen von der Sendehauptrichtung abweichen (Raumwinkel). Alternativ oder zusätzlich kann in Abhängigkeit eines jeweiligen Winkels, unter welchem das Mikrofon hinsichtlich der Sendehauptrichtung angeordnet ist, ein jeweiliger Empfindlichkeitsbereich der jeweiligen Mikrofone entsprechend gewählt werden. Da abseits der Sendehauptrichtung die zu erwarteten Schallpegel eines Ultraschallwandlers stark abnehmen, kann abseits der Hauptrichtung das empfindlichere Mikrofon angeordnet werden. Auf diese Weise kann trotz hohen Sendepegels zeitgleich und unter verschiedenen Winkeln geprüft werden.

Zusätzlich kann während des Sendevorgangs zusätzlicher Aufschluss über elektrische Parameter des Signalwandlers erhalten werden, indem die elektrischen Anschlüsse kontaktiert und elektrische Größen während des Prüfvorgangs aufgenommen, analysiert und beurteilt werden. Dies ergänzt die Prüfung des ausgesendeten akustischen Signals und ermöglicht eine redundante Prüfung zur Erhöhung der Messwertverlässlichkeit. Häufig kann jedoch gänzlich auf eine Überprüfung der eingeprägten Testsignale verzichtet werden, wenn beispielsweise durch technische Mittel, wie zum Beispiel mittels einer (Verstärkungs-)Regelung eine hinreichende Qualität des an die elektrischen Anschlüsse des Signalwandlers angelegten vordefinierten Testsignals sichergestellt ist.

Der Signalwandler ist erfindungsgemäß als Ultraschallwandler ausgestaltet, der im Endprodukt als Ultraschallsender und/oder als Ultraschallempfänger verwendet wird. Im automobilen Anwendungsbereich sind kombinierte Ultraschallsendeempfänger üblich, da der Hardwareaufwand auf diese Weise reduziert werden kann.

Alternativ können die Analyse und/oder die Beurteilung bereits innerhalb einer Baueinheit des Signalwandlers erfolgen. Mit anderen Worten ist innerhalb der Baueinheit (z.B. eines Gehäuses) des Signalwandlers eine Analyse-/Beurteilungseinrichtung vorgesehen und mit elektrischen Kontakten des Wandlers verbunden, welche für die erfindungsgemäße Funktionsüberprüfung verwendet werden kann. In diesem Fall können die externen elektrischen Anschlüsse verwendet werden, um das Analyse-/Beurteilungsergebnis an eine nachgeschaltete Instanz weiterzuleiten.

Auch bei dieser Signalflussrichtung kann eine Vorrichtung verwendet werden, welche eine vordefinierte relative Positionierung zwischen dem Signalwandler und der Schallerzeugung bzw. zwischen der Peripherie des Signalwandlers und der Schallerzeugung herstellt.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Prinzipdarstellung eines Messaufbaus zur erfindungsgemäßen Funktionsprüfung;
- Figur 2: ein Flussdiagramm, veranschaulichend Schritte eines Ausführungsbeispiels eines erfindungsgemäßen Verfahrens.

### Ausführungsformen der Erfindung

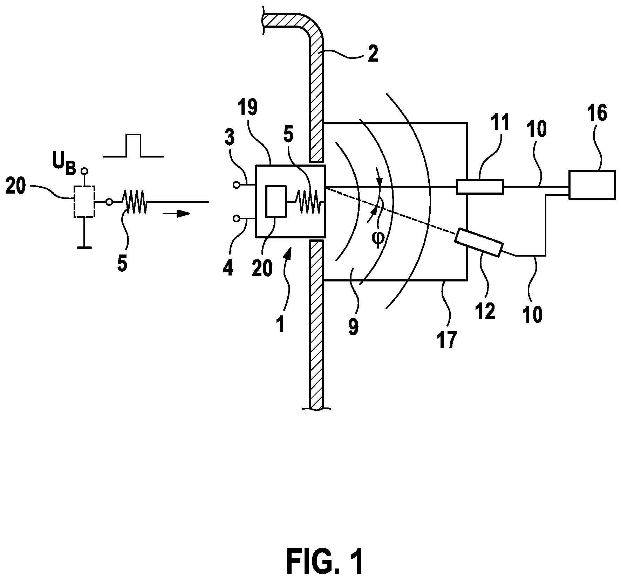

Figur 1 zeigt einen Messaufbau zur Durchführung eines Ausführungsbeispiels eines erfindungsgemäßen Verfahrens. Dabei wird ein Funktionsgenerator 20 zur Aussendung eines elektrischen Testsignals 5 verwendet, welches an den elektrischen Eingängen 3, 4 eines in einer Stoßstange als bestimmungsgemäße Peripherie 2 angeordneten Signalwandlers 1 anliegt. Auch der Signalwandler 1 weist einen Funktionsgenerator 20 auf, welcher innerhalb des Gehäuses 19 des Signalwandlers 1 angeordnet ist. Mit anderen Worten könnte also alternativ das elektrische Testsignal 5 auch innerhalb des Signalwandlers 1 erzeugt werden. Hierzu würde in einem Testbetriebsmodus an zumindest einem elektrischen Eingang 3, 4 ein Startsignal angelegt werden, im Ansprechen auf welches der Funktionsgenerator 20 den Testbetrieb aufnimmt. Über ein Gestell 17 als Vorrichtung sind zwei Mikrophone 11, 12 in unterschiedlichen Winkeln zu einer Hauptachse des Signalwandlers 1 in vordefinierter Weise zum Signalwandler 1 sowie zu der Stoßstange 2 angeordnet. Beide Mikrophone 11, 12 leiten über Signalleitungen die akusto-elektrisch gewandelten Prüfsignale 10 an eine Auswerteeinheit 16 weiter. Innerhalb der Auswerteeinheit 16 wird die Analyse und Beurteilung der Prüfsignale 10 vorgenommen und der Signalwandler 1 als "in Ordnung" oder "nicht in Ordnung" klassifiziert.

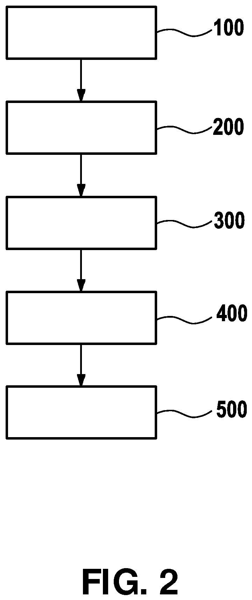

Figur 2 zeigt ein Flussdiagramm, veranschaulichend Schritte eines Ausführungsbeispiels eines erfindungsgemäßen Verfahrens. In Schritt 100 wird der Ultraschallwandler 1 in seiner bestimmungsgemäßen Peripherie angeordnet. Dies kann beispielsweise ein Einbauen des Ultraschallwandlers 1 in eine Heckschürze und/oder eine Stoßstange 2 eines Kraftfahrzeugs umfassen. Anschließend werden in Schritt 200 elektrische Anschlüsse 3, 4 des Ultraschallwandlers 1 mit einem vordefinierten Testsignal 5, 6, 7, 8 beaufschlagt und in Schritt 300 die im Ansprechen auf das Beaufschlagen des Ultraschallwandlers 1 abgestrahlten Ultraschallsignale 9, 10 aufgenommen. Dies erfolgt unter vordefinierten Randbedingungen, welchen entsprechenden Referenzen zugeordnet sind. In Schritt 400 wird anschließend das aufgenommene Ultraschallsignal 9, 10 hinsichtlich vordefinierter Parameter in einem Rechner 16 untersucht. Hierzu kann ein Analog/Digital-Konverter 14 verwendet werden. In Schritt 500 wird die Funktion des Ultraschallwandlers 1 anhand der vordefinierten Parameter sowie anhand der vordefinierten Randbedingungen sowie dem Ultraschallwandler 1 zugeordneter Referenzen beurteilt. Auf diese Weise kann eine Zerlegung des Ultraschallwandlers 1 zur Überprüfung seines Zusammenbaus und/oder etwaiger Beschädigungen unterbleiben.

Im Rahmen der vorliegenden Erfindung adressierte Ultraschallsensoren bzw. Signalwandler können beispielsweise für die Umfeldsensorik verwendet werden. Wenn im Rahmen der vorliegenden Erfindung von Mikrofonen als Schallaufnehmer die Rede ist, ist für den Fachmann ersichtlich, dass sämtliche Messsignalaufnehmer zur Wandlung akustischer Signale in elektrische Signale Verwendung finden können. Das erfindungsgemäße Verfahren kann nicht ausschließlich zur Überprüfung des Sensors verwendet werden. Um beispielsweise einen ordnungsgemäßen Testaufbau zu überprüfen, kann ein als ordnungsgemäß funktionierend geprüfter Sender in einer Peripherie angeordnet werden, und anschließend durch Beaufschlagen der elektrischen Anschlüsse des Ultraschallwandlers, Aufnehmen eines im Ansprechen auf das Beaufschlagen des Ultraschallwandlers ausgesendeten Signals und Analysieren des aufgenommenen Signals hinsichtlich der vordefinierten Parameter der Messaufbau sowie die Peripherie selbst geprüft werden. Hierbei kann beispielsweise festgestellt werden, ob der Messaufbau korrekt vorgenommen wurde und/oder die Peripherie aussagekräftig und repräsentativ für im bestimmungsgemäßen Gebrauch verwendete Peripherie ist.

Die erfindungsgemäß zu ermittelnden charakteristischen Merkmale der Signalwandler können sich im Laufe eines Produktlebens stark verändern. Dies kann beispielsweise infolge von Materialermüdung, Einbaufehler und Beschädigung eintreten. Einbaufehler, wie sie zum Beispiel beim manuellen Einbau des Sensors in den Halter unter Zuhilfenahme von Entkopplungsringen auftreten, können heute nicht systematisch ausgeschlossen werden. Die Überprüfung des Einbaus spielt beispielsweise auch beim sogenannten "verdeckten Verbau" (siehe DE 10 2010 031573) eine bedeutende Rolle. Beschädigungen der Wandler (z.B. durch unsachgemäßes Hantieren während der Lackierung) können nicht systematisch ausgeschlossen werden. Beschädigungen treten zudem beispielsweise auch infolge von Steinschlag während des Betriebs der Sensoren, insbesondere der Frontsensoren, auf. Sie sind teilweise mit bloßem Auge schwer erkennbar und können sich in unerwartet geänderten Messergebnissen bemerkbar machen. Diese Verhaltensweise kann mitunter stark temperaturabhängig sein, so dass unter Laborbedingungen nicht unmittelbar eine Fehlfunktion erkannt werden kann.

Erfindungsgemäß wurde erkannt, dass die Wandlereigenschaften und die elektrischen Signaleigenschaften durch den Elektro-Akustik-Wandler in akustische Eigenschaften gewandelt werden. Grundgedanke dieses Vorschlags ist somit, die vom Wandler während und nach der Messanregung ausgestrahlten akustischen Informationen detailliert bezüglich ihres Zeitverlaufs zu analysieren und daraus charakteristische Größen abzuleiten. Dazu wird vorgeschlagen, zumindest zwei Messmikrofone vor dem Wandler zu platzieren und das vom Wandler akustisch ausgestrahlte Signal mittels eines Algorithmus' zu analysieren. Viele Standard-Notebooks sind heute bereits in der Lage, Signale mit bis zu 192 kHz abzutasten, so dass eine solche Überwachungshardware im einfachsten Fall zwei Mikrofone, gegebenenfalls mit Vorverstärker versehen, und einen Standard-Rechner mit darauf laufender Software umfassen kann. Die mindestens zwei Mikrofone verarbeiten dabei unterschiedliche Signallautstärken.

Weitergehende Ausprägungen (z.B. die Signale aus verschiedenen Richtungen vom Wandler aufnehmen, und/oder Verwendung von Spezialhardware zur Sensorbeurteilung, wie z.B. spezielle Analog-DigitalWandler und/oder spezielle Auswerterechner) sind ebenfalls denkbar. Will man die Richtcharakteristik der verbauten Wandler erfassen, sollten mehrere Mikrofone vor dem zu untersuchenden Objekt (Stoßfänger, Fahrzeug o.Ä.) angeordnet werden. Dabei werden die Mikrofone zweckmäßigerweise mittels Vorrichtungen zueinander in einer festen räumlichen Beziehung angeordnet und/oder die Vorrichtung in Bezug zu dem zu untersuchenden Objekt nach einer reproduzierbaren Regel angeordnet. Am Zeitverlauf der Hüllkurve des Einschwingens während der Sendeanregung kann nun beispielsweise die Dämpfungszeitkonstante erkannt werden. Erreicht die Signalstärke rasch ihren Endwert und beharrt auf diesem Wert, so ist die Dämpfungszeitkonstante klein und es wird das elektrische Messsignal effektiv in ein akustisches Messsignal gewandelt. Hohe ausgestrahlte Messenergie sichert eine entsprechende Reichweite der Sensoren. Dauert es hingegen bis zum Erreichen der endgültigen Signalstärke relativ lange, ist die ausgestrahlte Messenergie entsprechend reduziert. Darüber hinaus sind Informationen aus der Höhe des Endwertes des ausgestrahlten akustischen Signals ableitbar, wie dies im Stand der Technik bereits durchgeführt wird. In Abhängigkeit der elektrischen Anregung lässt sich aus diesem Wert beispielsweise der Wirkungsgrad des Wandlers bestimmen. Prüft man diesen Wert im Verbund mit der Peripherie des Wandlers, so machen sich auch Änderungen aufgrund etwaiger Verbaufehler bemerkbar. Bereits aus dem Zeitverlauf der Hüllkurve des ausgestrahlten akustischen Signals kann man grundlegende Merkmale aus dem Frequenzverlauf des Wandlersignals erkennen. Schwankt die Hüllkurve zu Sendebeginn häufiger um ihren Endwert, liegen andere charakteristische Eigenschaften vor, als wenn die Hüllkurve nach Erreichen ihres Endwertes diesen nicht mehr signifikant verlässt. Weitere detaillierte Informationen über die charakteristischen Merkmale (vordefinierte Parameter) des Wandlers lassen sich aus dem Zeitverlauf der Momentanfrequenz des akustischen Signals ableiten. Sie enthält z.B. Informationen über die Eigenfrequenz des Wandlers, die vereinfacht als Serienschwingkreis modelliert werden kann. Wird das Zeitverhalten des elektrischen Signals am Wandler durch seine Beschaltung charakterisiert, wie z.B. durch das Parallelschalten eines Übertragers, so macht sich diese Beschaltung auch im ausgesandten akustischen Signal bemerkbar und enthält Informationen über die Resonanzfrequenz eines solchen Parallelschwingkreises. Auch aus dem akustischen Ausschwingsignal können, ähnlich dem Einschwingsignal, charakteristische Merkmale des Sensors abgelesen werden. Die Stärke des Ausschwingsignals durchläuft dabei einige Zehnerpotenzen. Neben der Bestätigung/Verifikation der beim Einschwingen bestimmten charakteristischen Merkmale kann im Ausschwingsignal sowohl das Großsignalverhalten als auch das Kleinsignalverhalten des Wandlers sowie der Schaltung und deren Unterschiede zueinander erkannt und bewertet werden. Beispielsweise könnte ein beschädigter Wandler während des Aussendens dank der dabei herrschenden großen Ansteuerspannungen noch innerhalb des Erwartungsbereiches liegen, weil z.B. Haarrisse durch Spannungsüberschläge überbrückt werden, welche jedoch bei kleinen Spannungen einen Teil des Wandlers deaktivieren, so dass das Kleinsignalverhalten sich deutlich bezüglich der charakteristischen Resonanzfrequenzen unterscheidet. Um sowohl während des Aussendens als auch bei kleineren Ausschwingsignalen (z.B. während des Ausschwingens) das akustische Signal auswerten zu können, ist erfindungsgemäß die Verwendung mehrerer Mikrofone vorgesehen und darüber hinaus die Verwendung von Mikrofonen mit unterschiedlicher akustischer Bedämpfung oder die Verwendung durch unterschiedliche räumliche Bedämpfung charakterisierte unterschiedliche Positionen der Mikrofone/des Mikrofons denkbar. Alternativ kann auch bei einer Folge von Aussendungen (Testsignale), insbesondere bei sich wiederholenden gleichartigen Aussendungen, das thermische Verhalten des Wandlers getestet werden. Ist zusätzlich die Position des Aufnehmers vor dem aussendenden Signalwandler bekannt, kann die Richtcharakteristik bestimmt werden.

Bevorzugt sollte bei der akustischen Bewertung der Wandler/Wandlersysteme ein von ihnen standardgemäß ausgesandtes akustisches Messsignal analysiert werden. Bevorzugt eignen sich dazu Pulse mit fester Frequenz, wenn es sich um schmalbandige Elektro-Akustik-Wandler handelt. Breitbandige Wandler können bevorzugt mit Signalen getestet werden, die das ganze Durchlassfrequenzband oder jeweils nur einen Teil des Bandes abdecken. Vorzugsweise können sogenannte "krumme Chirps", wie sie in der WO 2010 063 510 A1 offenbart sind, bzw. "m-ähre" Mehrträger-Sendesignale zur akustischen Umfeldüberwachung (DE 102011088225 A1) oder Mehrtonpulsmustercodierung zur akustischen Umfeldüberwachung verwendet werden. Alternativ kann dabei auch ein spezielles Testsignal ausgesendet werden, das nicht nur im Durchlassbereich des Wandlers liegt, sondern auch außerhalb. Dazu ist der Sensor jedoch in einen speziellen Modus zum Aussenden des Testsignals zu versetzen. Dies ergibt insbesondere bei Mehrfrequenzwandlern (siehe DE 10 2010 027 780) einen Sinn, bei welchen der Frequenzgang durch mehrere Durchlassbereiche charakterisiert ist.

Ein einfaches Verfahren zur Charakterisierung des gemessenen Signals ist die Verwendung von einem oder von mehreren laufzeitabhängigen Schwellwerten, mit deren Hilfe z.B. ein Über- bzw. Unterschreiten der zuvor aus dem akustischen Signal gewonnenen Hüllkurve analysiert wird. Die Bestimmung einer Hüllkurve mit analogen bzw. digital realisierten Filtern ist einfacher als eine spektrale Analyse. Eine über die Hüllkurvenanalyse hinausgehende Untersuchung ist hingegen deutlich aufwändiger. Bei schmalbandigen Ultraschallwandlern können die akustischen Signale mittels Mischen und Mittelbwertbilden in ein Basisbandsignal gewandelt und anschließend analysiert werden Bei breitbandigen Verfahren kann dieses Verfahren auch angewendet werden, wenn das zu analysierende Signal dies zulässt (d.h., entsprechend schmalbandig ist). Je nach Lage des schmalen Signals im Spektrum (Frequenzbereich) können dabei unterschiedliche Mischfrequenzen zum Einsatz gelangen. Bei breitbandigen Wandlern können jedoch auch breitbandige Messsignale zu deren Analyse herangezogen werden, wie z.B. die Verwendung von Chirps, m-ähren-Mischsignalen unterschiedlich kurzem Pulsen mit/ohne Trägerfrequenzmischung. Eine berührungslose Sensorbeurteilung sollte jedoch auch bei solchen Sensoren möglich sein, die selbst keine Messsignale aussenden, wie z.B. messsignallose akustische Umfeldsensorik (DE 102011079707 A1).

Bei der Prüfung solcher Sensoren ist ein Vorwissen über deren Empfänger und die Auswertestrategie erforderlich. Lassen sich Systeme mit solchen Sensoren nicht in einen gesonderten Testmodus versetzen, kann man deren Funktionalität nur im Verbund mit den realisierten Funktionen testen. Beispielsweise können die Sensoren hierzu akustisch von der Umwelt abgekoppelt und - erforderlichenfalls abhängig von anderen Fahrzeugsignalen - den Sensoren Testsignale vorgespielt werden.

Besitzt der zu testende Sensor hingegen Filter, die für die Tests optimiert werden können, sollte dies in einem Testmodus geschehen. In "Effiziente Dopplerverschiebungsdetektion bei der akustischen Umfeldüberwachung" (DE 102011088346 A1) ist beispielsweise gezeigt, wie effizient eine gesamte Bank von Empfangsfiltern realisiert werden kann. Durch Variation der Misch- bzw. Abtastfrequenz kann die Lage einer solchen Filterbank im Frequenzbereich leicht verändert werden.

Wenn im Rahmen der vorliegenden Erfindung von Ultraschallwandlern bzw. Ultraschallsendern bzw. Ultraschallempfängern bzw.

Ultraschallsendeempfängern die Rede ist, ist für den Fachmann ersichtlich, dass die zugrunde liegenden Prinzipien auf nach ähnlichen Gesetzmäßigkeiten funktionierende Vorrichtungen übertragbar sind und diese ebenfalls als Gegenstand der vorliegenden Offenbarung gelten.

## Patentansprüche

1. Verfahren zur Funktionsprüfung eines zum akustischen Senden von Ultraschallsignalen eingerichteten Signalwandlers (1) umfassend die Schritte:
- Anordnen (100) des Signalwandlers (1) in seiner bestimmungsgemäßen Peripherie (2), wobei die Peripherie (2) einen Karosserie-Bestandteil eines Fortbewegungsmittels umfasst,
- Beaufschlagen (200) eines elektrischen Anschlusses (3, 4) des Signalwandlers (1) mit mindestens einem vordefinierten Testsignal (5),
- Aufnehmen (300) eines im Ansprechen auf das Beaufschlagen (200) ausgesendeten Prüfsignals (9) unter vordefinierten Randbedingungen,
- Analysieren (400) des aufgenommenen Prüfsignals (10) hinsichtlich vordefinierter Parameter, und
- Beurteilen (500) der Funktion des Signalwandlers (1) anhand der vordefinierten Parameter sowie anhand dem Signalwandler (1) zugeordneter Referenzen
**dadurch gekennzeichnet, dass** das Aufnehmen (300) mittels mindestens zweier Mikrophone (11, 12) erfolgt, wobei
- ein erstes Mikrophon (11) einen ersten Empfindlichkeitsbereich aufweist,
- ein zweites Mikrophon (12) einen zweiten Empfindlichkeitsbereich aufweist, und wobei der erste Empfindlichkeitsbereich und der zweite Empfindlichkeitsbereich zumindest anteilig verschieden sind,
wobei
- der erste Empfindlichkeitsbereich auf einen Sendevorgang mittels des Signalwandlers (1) abgestimmt ist, und
- der zweite Empfindlichkeitsbereich auf einen Ausschwingvorgang des Signalwandlers (1) abgestimmt ist.

2. Verfahren nach Anspruch 1, wobei die Randbedingungen zumindest hinsichtlich einer relativen Anordnung der mindestens zwei Mikrophone (11, 12) gegenüber dem Signalwandler (1) oder der Peripherie (2) vordefiniert sind.

3. Verfahren nach Anspruch 1 oder 2,
- wobei die mindestens zwei Mikrophone (11, 12) über eine Vorrichtung (17) relativ zur Peripherie (2) und/oder zum Signalwandler (1) positioniert werden, und
- wobei der elektrische Anschluss (3, 4) gemeinsam mit dem Signalwandler (1) innerhalb eines Gehäuses (19) angeordnet ist.

4. Verfahren nach einem der vorstehenden Ansprüche, wobei
- das erste Mikrophon (11) eine erste Position relativ zum Signalwandler (1) aufweist,
- das zweite Mikrophon (12) eine zweite Position relativ zum Signalwandler (1) aufweist,
- und wobei die erste Position und die zweite Position zur Ermittlung einer Richtcharakteristik in unterschiedlichen Winkeln (0°, φ) hinsichtlich einer Sendehauptrichtung (13) des Signalwandlers (1) angeordnet sind.

5. Verfahren nach einem der vorstehenden Ansprüche, zusätzlich umfassend Aufnehmen, Analysieren und Beurteilen elektrischer Parameter des Signalwandlers (1) während des Beaufschlagens (200) mit dem Testsignal (5).

6. Verfahren nach einem der vorstehenden Ansprüche, wobei die vordefinierten Parameter ausgewählt sind aus
- einem Wirkungsgrad des Signalwandlers (1),
- einer Dämpfungszeitkontante und/oder einem Dämpfungsverhalten des Signalwandlers (1),
- einer Resonanzfrequenz des Signalwandlers (1),
- einer Resonanzfrequenz der den Signalwandler (1) umgebenden Schaltung,
- einer Differenz der beiden vorgenannten Frequenzen,
- einer Gesamtresonanzfrequenz des Signalwandlers (1) in Verbindung mit der den Signalwandler (1) umgebenden Schaltung

7. Verfahren nach einem der vorstehenden Ansprüche, wobei die Peripherie (2) einen Stoßfänger eines Straßenfahrzeugs umfasst.

## Claims

1. Method for checking the operation of a signal transducer (1) configured for acoustically sending ultrasonic signals, comprising the steps of:
- arranging (100) the signal transducer (1) in its intended peripheral area (2), the peripheral area (2) comprising a bodywork component of a means of locomotion,
- applying (200) at least one predefined test signal (5) to an electrical connection (3, 4) of the signal transducer (1),
- picking up (300) a check signal (9) sent in response to the applying (200) under predefined constraints,
- analysing (400) the picked-up check signal (10) in respect of predefined parameters, and
- assessing (500) of the operation of the signal transducer (1) on the basis of the predefined parameters and on the basis of references associated with the signal transducer (1),
**characterized in that** the picking up (300) is effected by means of at least two microphones (11, 12), wherein
- a first microphone (11) has a first sensitivity area,
- a second microphone (12) has a second sensitivity area, and wherein the first sensitivity area and the second sensitivity area are at least proportionally different,
wherein
- the first sensitivity area is tuned to a sending process by means of the signal transducer (1) and
- the second sensitivity area is tuned to a decay process in the signal transducer (1).

2. Method according to Claim 1, wherein the constraints at least in respect of an arrangement of the at least two microphones (11, 12) relative to the signal transducer (1) of the peripheral area (2) are predefined.

3. Method according to Claim 1 or 2,
- wherein the at least two microphones (11, 12) are positioned relative to the peripheral area (2) and/or to the signal transducer (1) by means of an apparatus (17), and
- wherein the electrical connection (3, 4) is arranged inside a package (19) together with the signal transducer (1).

4. Method according to one of the preceding claims, wherein
- the first microphone (11) has a first position relative to the signal transducer (1),
- the second microphone (12) has a second position relative to the signal transducer (1),
- and wherein the first position and the second position are arranged at different angles (0°, φ) in respect of a main direction of sending (13) of the signal transducer (1) to ascertain a polar pattern.

5. Method according to one of the preceding claims, additionally comprising
picking up, analysing and assessing electrical parameters of the signal transducer (1) while the test signal (5) is applied (200).

6. Method according to one of the preceding claims, wherein the predefined parameters are selected from
- an efficiency of the signal transducer (1),
- a damping time constant and/or a damping behaviour of the signal transducer (1),
- a resonant frequency of the signal transducer (1),
- a resonant frequency of the circuit surrounding the signal transducer (1),
- a difference between the two aforementioned frequencies,
- a total resonant frequency of the signal transducer (1) in conjunction with the circuit surrounding the signal transducer (1).

7. Method according to one of the preceding claims, wherein the peripheral area (2) comprises a bumper of a road vehicle.

## Revendications

1. Procédé de contrôle du fonctionnement d'un convertisseur de signal (1) conçu pour l'émission acoustique de signaux ultrasonores, comprenant les étapes suivantes :
- disposition (100) du convertisseur de signal (1) dans sa périphérie (2) conforme à sa destination, la périphérie (2) comportant un élément constitutif de carrosserie d'un moyen de déplacement,
- sollicitation (200) d'une borne électrique (3, 4) du convertisseur de signal (1) avec au moins un signal de test (5) prédéfini,
- enregistrement (300) d'un signal de contrôle (9) émis en réaction à la sollicitation (200) sous des conditions aux limites prédéfinies,
- analyse (400) du signal de contrôle (10) enregistré en vue de la présence de paramètres prédéfinis, et
- évaluation (500) du fonctionnement du convertisseur de signal (1) à l'aide des paramètres prédéfinis ainsi qu'à l'aide de références associées au convertisseur de signal (1)
**caractérisé en ce que** l'enregistrement (300) s'effectue au moyen d'au moins deux microphones (11, 12),
- un premier microphone (11) possédant une première plage de sensibilité,
- un deuxième microphone (12) possédant une deuxième plage de sensibilité, et la première plage de sensibilité et la deuxième plage de sensibilité étant au moins proportionnellement différentes,
- la première plage de sensibilité étant accordée sur une opération d'émission au moyen du convertisseur de signal (1), et
- la deuxième plage de sensibilité étant accordée sur une opération d'évanouissement du convertisseur de signal (1) .

2. Procédé selon la revendication 1, les conditions aux limites étant prédéfinies au moins du point de vue d'une disposition relative des au moins deux microphones (11, 12) par rapport au convertisseur de signal (1) ou à la périphérie (2).

3. Procédé selon la revendication 1 ou 2,
- les au moins deux microphones (11, 12) étant positionnés par le biais d'un arrangement (17) par rapport à la périphérie (2) et/ou par rapport au convertisseur de signal (1), et
- la borne électrique (3, 4) étant disposée conjointement avec le convertisseur de signal (1) à l'intérieur d'un boîtier (19).

4. Procédé selon l'une des revendications précédentes,
- le premier microphone (11) possédant une première position par rapport au convertisseur de signal (1),
- le deuxième microphone (12) possédant une deuxième position par rapport au convertisseur de signal (1),
- et la première position et la deuxième position étant disposées de manière à déterminer une caractéristique d'orientation dans différents angles (0°, φ) du point de vue d'une direction principale d'émission (13) du convertisseur de signal (1).

5. Procédé selon l'une des revendications précédentes, comprenant en outre l'enregistrement, l'analyse et l'évaluation de paramètres électriques du convertisseur de signal (1) pendant la sollicitation (200) avec le signal de test (5).

6. Procédé selon l'une des revendications précédentes, les paramètres prédéfinis étant choisis parmi
- un taux de rendement du convertisseur de signal (1),
- une constante de temps d'amortissement et/ou un comportement d'amortisseur du convertisseur de signal (1),
- une fréquence de résonance du convertisseur de signal (1),
- une fréquence de résonance du circuit qui entoure le convertisseur de signal (1),
- une différence entre les deux fréquences susmentionnées,
- une fréquence de résonance totale du convertisseur de signal (1) en association avec le circuit qui entoure le convertisseur de signal (1).

7. Procédé selon l'une des revendications précédentes, la périphérie (2) comprenant un pare-chocs d'un véhicule routier.
